# EUROPEAN PATENT APPLICATION

(11) **EP 2 030 741 A2**
(43) Date of publication of application: **04.03.2009**
(21) Application number: 08014067.6
(22) Date of filing: 06.08.2008
(51) Int. Cl.: B25J 9/16

(54) **Robot controller having stoppage monitoring function**

(30) Priority: 27.08.2007 JP 2007220111
(71) Applicant: Fanuc Ltd, Yamanashi 401-0597 (JP)
(72) Inventor: Nihei, Ryo, Minamitsuru-gun Yamanashi (JP); Kato, Tetsuaki, Minamitsuru-gun Yamanashi (JP); Aramaki, Takeaki, Minamitsuru-gun Yamanashi (JP); Yamamoto, Tomoyuki, Minamitsuru-gun Yamanashi (JP)
(74) Representative: Thum, Bernhard

(57) **Abstract**

A robot controller having a stoppage monitoring function, by which safety of an operator is ensured without using hardware or the like for allowing/stopping the power transmission to each of a robot and a cooperating device. A CPU of the robot controller periodically monitors the position of the robot or the cooperating device based on positional information from each servomotor and the state of entering information regarding the robot or the cooperating device. Then, when entering information is initially input, the position of the servomotor of the robot or the cooperating device, to which the entering information is applied, is stored in RAM. After that, while the entering information is being input, the distance between the position stored in RAM and the current position of the servomotor is calculated. If the calculated distance is larger than an allowable moving distance, the CPU sends a command to an emergency stopping part in order to cut-off power to all servomotors of the robot and the cooperating device.

## Description

### RELATED APPLICATIONS

The present application claims priority from Japanese Patent Application No. 2007-220111, filed on August 27, 2007, the entire content of which is fully incorporated herein by reference.

### BACKGROUND OF THE INVENTION

### 1. Field of the Invention

The present invention relates to a robot controller for controlling an industrial robot (hereinafter, referred to as "a robot"), and in particular, a robot controller having a stoppage monitoring function.

### 2. Description of the Related Art

Generally, a robot controlled by a robot controller is driven by a servomotor and is often combined with another device configured to cooperate with the robot in order to constitute a robot system. One or more devices for cooperating with the robot may be prepared. Such a robot system includes a movable structure having an operation range, such as a work stage driven by a servomotor, and an area (hereinafter, referred to as "a restricted area") which an operator is prohibited from entering when the system is in operation for safety reasons. Therefore, a method for ensuring the safety of the operator has been proposed, when an operator approaches a dangerous device and/or enters the restricted area.

For example, Japanese Unexamined Patent Publication No. 2004-122258 discloses a technique using a simple circuit breaker in a robot system in order to ensure the safety of an operator. In the invention of Japanese Unexamined Patent Publication No. 2004-122258, when an operator enters the restricted area, entering is allowed when power is not supplied to a servo amplifier, otherwise, the robot system is placed into an emergency stop state.

In the prior art, it is necessary that the robot system has hardware for allowing/stopping of power transmission to the servomotor in each device; however there is a problem that the cost of the robot system is increased. Further, in order to monitor whether the robot or the cooperating device is activated or stopped, it is necessary to detect even a minor operation such as a break releasing.

### SUMMARY OF THE INVENTION

Accordingly, an object of the present invention is to provide a robot controller having a stoppage monitoring function, by which safety of an operator is ensured without using hardware or the like for allowing/stopping of the power transmission to the robot and cooperating device.

According to the present invention, there is provided a robot controller for controlling a robot having at least one control axis driven by a servomotor and a cooperating device, performing a work in cooperation with the robot, having at least one control axis driven by a servomotor, the robot controller comprising: a controlling part for receiving a command indicating whether a stoppage state of each of the robot and the cooperating device is to be monitored; a judging part for judging, when the controlling part receives a command to monitor a stoppage state of at least one of the robot and the cooperating device, whether the robot or the cooperating device, the stoppage state of which is commanded to be monitored, is stopped, based on the position input by a positional detector arranged on a servomotor for driving a control axis of the robot or the cooperating device; and an emergency stopping part configured to not activate while the robot or the cooperating device, the stoppage state of which is commanded to be monitored, is judged to be stopped, and to stop both the robot and the cooperating device when the robot or the cooperating device, the stoppage state of which is commanded to be monitored, is judged not to be stopped.

The robot controller may further comprise a storing part for storing positional data input by the positional detector arranged on a servomotor for driving a control axis of the robot or the cooperating device, just after the controlling part is received the command for monitoring the stoppage state; and a calculating part for calculating the distance between the position stored in the storing part and the position input by the positional detector when the command for monitoring the stoppage state is executed. In this case, the judging part judges that the robot or the cooperating device is stopped when the distance calculated by the calculating part is equal to or smaller than a predetermined upper limit.

The robot controller may further comprise first and second entering detecting parts for detecting the entering of an operator in relation to the robot and the cooperating device, respectively. In this case, the command for monitoring the stoppage state is preferably received by the controlling part while at least one of the first and second detecting parts detect the entering of the operator.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows a configuration of a robot system including a robot controller of the invention; and
Fig. 2 shows a flowchart showing the procedure of the robot controller of Fig. 1.

### DETAILED DESCRIPTION

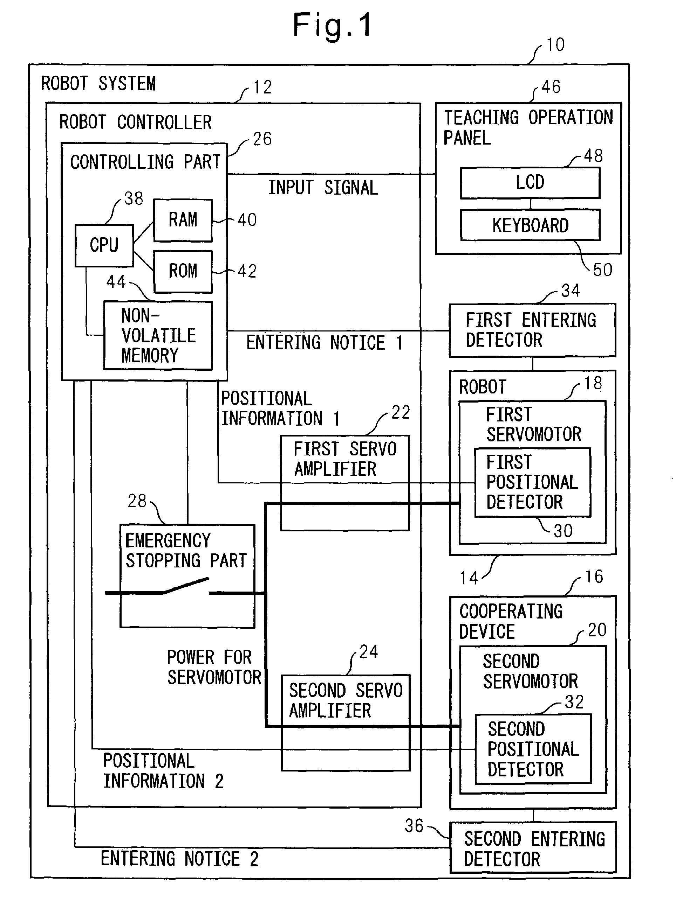

Fig. 1 shows a schematic configuration of a robot system including a robot controller of the invention. A robot system 10 includes a robot controller 12, a robot 14 controlled by robot controller 12 and a cooperating device 16 for performing work in cooperation with robot 14. Each of robot 14 and cooperating device 16 is activated by at least one first servomotor 18 and at least one second servomotor 20, respectively. First and second servo amplifiers 22 and 24 supply power to first and second servomotor 18 and 20, respectively. The general operation control of these servo amplifiers is performed by robot controller 12. In Fig. 1, a part of robot controller 26 performing the general operation control is indicated as a controlling part 26.

Robot controller 12 has an emergency stopping part 28 for cutting off all power supply to the servo amplifiers connected to the robot controller. The first and second servomotors have first and second positional detector 30 and 32, respectively. Positional information 1 and 2 from positional detectors 30 and 32 is input into controlling part 26 having a receiving function via servo amplifiers 22 and 24, respectively. Robot 14 and cooperating device 16 have first and second entering detecting parts 34 and 36, respectively, for detecting the entering of an operator (for example, when the operator approaches the robot or the cooperating device within a predetermined distance). Entering detecting parts 34 and 36 are configured to output entering notices 1 and 2, respectively, when each detecting part detects the entering of the operator, and the entering notices are then input to controlling part 26.

Controlling part 26 includes a CPU 38 having judging and calculating functions, a RAM 40, a ROM 42 and a non-volatile memory 44. CPU 38 controls the robot system. ROM 42 stores various system programs. RAM 40 is a temporary memory used by CPU 38. Non-volatile memory 44 stores various programs regarding the motion of robot 14 and setting values or the like.

A teaching operation panel 46 is connected to controlling part 26. Teaching operation panel 46 has a liquid crystal display (LCD) 48 and a keyboard 50, by means of which an user can input/modify program data and/or regarding setting data. The user may set, via teaching operation panel 46, whether a stoppage state of each of the servomotors of robot 14 and cooperating device 16 should be monitored, and the set data by the user is transmitted to controlling part 26 as an input signal. When the stoppage state of the servomotor is monitored, it may be set which entering information is applied to the robot or the cooperating device. Further, an allowable moving distance (as described below), by which an axis of the robot or the cooperating device may be considered to be stopped, may be set in relation to each axis. These set data is stored in non-volatile memory 44.

CPU 38 periodically monitors the position of the robot or the cooperating device based on the positional information from each servomotor and the state of the entering information, in relation to the robot or the cooperating device the stoppage state of which is commanded to be monitored by inputting a command to teaching operation panel. Then, when entering information is initially input, the position of the servomotor of the robot or the cooperating device, to which the entering information is applied, is stored in RAM 40. After that, while the entering information is being input, the distance between the position stored in RAM 40 and the current position of the servomotor is calculated. If the calculated distance is larger than an allowable moving distance, CPU 38 send a command to emergency stopping part 28 in order to cut-off power of all servomotors 18 and 20 of robot 14 and cooperating device 16.

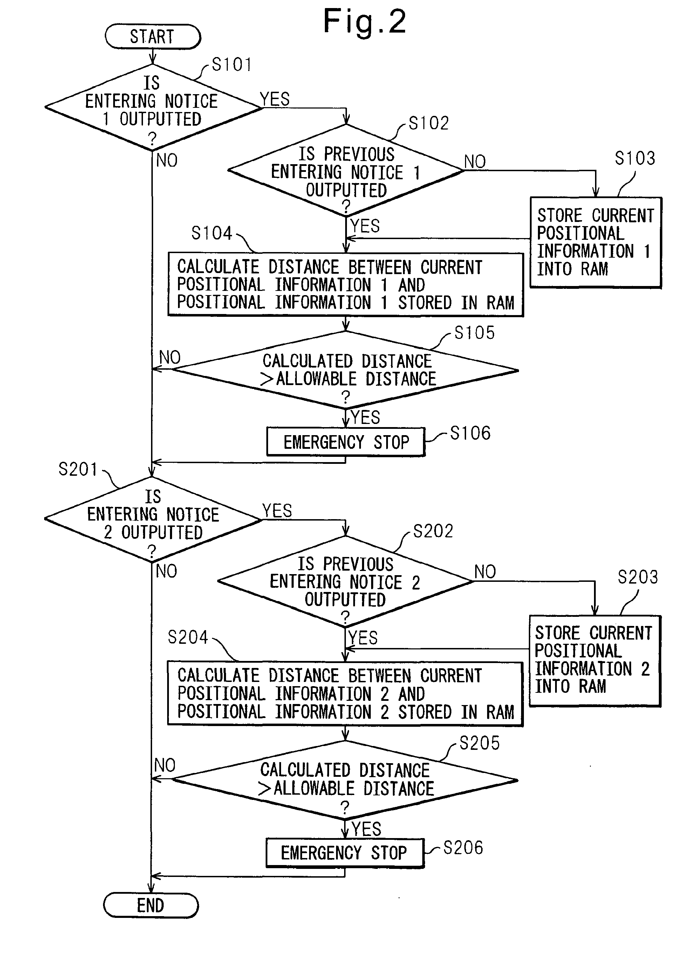

Fig. 2 is a flowchart indicating the above operations. First, in step S101, when entering notice 1 from first entering detecting part 34 is input to controlling part 26, the procedure progresses to step S102 and judges whether entering notice 1 is a first notice (otherwise, there is another entering notice 1 prior to this notice). If entering notice 1 is a first notice, the procedure progresses to step S103 and current positional information 1 is stored in RAM 40. Otherwise, the procedure progresses directly to S104 from S102.

In step S104, the difference between current positional information 1 and positional information 1 stored in RAM 40 (i.e., the moving distance of servomotor 18) is calculated. Therefore, if the procedure progresses to step S104 via step S103, the distance is equal to zero. Then, in step S105, the distance calculated in step S104 and an allowable moving distance is compared. At this point, the allowable moving distance means a moving distance (generally, a very short distance) by which each control axis is allowed to be moved as long as the operator is not in danger. The term "stoppage state" herein means both the state in which each axis is being stopped and the state in which at least one axis has been moved by the distance equal to or smaller than the allowable moving distance. Therefore, when the calculated distance is larger than the allowable moving distance, an axis of the robot is judged to be moved such that the robot is no longer in the stoppage state, and then, emergency stopping part 28 is activated to cut-off power to all servomotor (servomotors 18 and 20, in this case) of robot 14 and cooperating device 16 (step S106), for the safety of the operator. The series of procedures are performed with respect to each axis, when the robot has a plurality of axes.

As described above, while the entering notice is output (i.e., the operator is in the restricted area) the distance between the position stored in RAM 40 and the current position is calculated at a proper time intervals. While the distance is equal to or smaller than the allowable moving distance, each axis or servomotor of the robot may be considered to be in the stoppage state, the operator is not in danger particularly. Therefore, in this state, the emergency stopping part is not activated. On the other hand, when the distance is larger than the allowable moving distance, at least one axis of the robot is considered to be moved, the emergency stopping part is activated for the safety of the operator.

The following steps S201 to S206 as shown in Fig. 2 relate to the procedure for cooperating device 16. The detailed description of these steps are omitted, since steps S201 to S206 may be the same as steps S101 to S106 regarding robot 14, except that positional information 1 and entering notice 1 are changed to positional information 2 and entering notice 2, respectively, in steps S201 to S206. By performing steps S101 to S206, when it is judged that the operator enters the restricted area and at least one axis of the robot or the cooperating device is not in the stoppage state, the emergency stopping part is activated for the safety of the operator. In other words, even when the operator exists the restricted area, the emergency stopping part is not activated if all axes of the robot and the cooperating device are in the stoppage state, whereby recovery work after the emergency stop may be avoided.

Although the above embodiment includes one robot and one operating device, the invention may include a plurality of cooperating devices and/or the cooperating device may be replaced with another robot. In the latter case, the invention may be applied to a system for controlling a plurality of robots.

According to the robot controller of the invention, when the operator enters or exists in the restricted area, it is monitored whether the robot and/or the cooperating device regarding the restricted area is stopped. If the robot or the cooperating device is not stopped, power to all control axes of the robot and the cooperating device is cut off. Therefore, while the operator is in the restricted area, both the robot and the cooperating device are stopped or power is cut off, there by the safety of the operator is ensured.

As a criterion for judging the stoppage state of the robot and/or the cooperating device, the position of the robot or the cooperating device when the operator enters the restricted area is compared to the current position thereof. If the distance between the positions is not larger than the predetermined allowable distance, the robot or the cooperating device may be considered to be stopped. Due to this, an error regarding the stoppage state of the robot or the cooperating device may be avoided, and dangerous movement of the robot or the cooperating device may be avoided.

## Claims

1. A robot controller (12) for controlling a robot (14) having at least one control axis driven by a servomotor (18) and a cooperating device (16), performing a work in cooperation with the robot (14), having at least one control axis driven by a servomotor (20), **characterized in that** the robot controller (12) comprises:
a controlling part (26) for receiving a command whether a stoppage state of each of the robot (14) and the cooperating device (16) is to be monitored;
a judging part (38) for judging, when the controlling part (26) receives a command to monitor a stoppage state of at least one of the robot (14) and the cooperating device (16), whether the robot (14) or the cooperating device (16), the stoppage state of which is commanded to be monitored, is stopped, based on the position input by a positional detector (30, 32) arranged on a servomotor (18, 20) for driving a control axis of the robot (14) or the cooperating device (16); and
an emergency stopping part (28) configured to not activate while the robot (14) or the cooperating device (16), the stoppage state of which is commanded to be monitored, is judged to be stopped, and to stop both the robot (14) and the cooperating device (16) when the robot (14) or the cooperating device (16), the stoppage state of which is commanded to be monitored, is judged not to be stopped.

2. The robot controller according to claim 1, further comprising:
a storing part (40) for storing positional data input by the positional detector (30, 32) arranged on a servomotor (18, 20) for driving a control axis of the robot (14) or the cooperating device (16), just after the controlling part is received the command for monitoring the stoppage state; and
a calculating part (38) for calculating the distance between the position stored in the storing part (40) and the position input by the positional detector (30, 32) when the command for monitoring the stoppage state is executed,
wherein the judging part (38) judges that the robot (14) or the cooperating device (16) is stopped when the distance calculated by the calculating part (38) is equal to or smaller than a predetermined upper limit.

3. The robot controller according to claim 1, further comprising:
first and second entering detecting parts (34, 36) for detecting the entering of an operator in relation to the robot (14) and the cooperating device (16), respectively, wherein the command for monitoring the stoppage state is received by the controlling part (26) while at least one of the first and second detecting parts (34, 36) detect the entering of the operator.
